# EUROPEAN PATENT APPLICATION

(11) **EP 4 768 248 A2**
(43) Date of publication of application: **01.07.2026**
(21) Application number: 26178552.1
(22) Date of filing: 14.12.2018
(51) Int. Cl.: B33Y 10/00

(54) **DENTAL APPLIANCES HAVING PATIENT SPECIFIC MATERIAL STRESS ARRANGEMENTS AND ASSOCIATED METHOD OF MANUFACTURE**

(30) Priority: 31.01.2018 US 201815884463
(62) Divisional of application: 23185167.6
(71) Applicant: ClearCorrect Operating, LLC, Round Rock, TX 78665 (US)
(72) Inventor: Moore, Marbert, Liberty Hill, 78642 (US)
(74) Representative: Michalski Hüttermann & Partner mbB

(57) **Abstract**

The invention concerns a dental appliance comprising a matrix of printed voxels having a three-dimensional shape of a dental arch for surrounding a set of teeth corresponding to a first teeth alignment of a patient, the shape of the dental arch having a lingual side, an occlusal surface, and a facial side; wherein each voxel includes a deposited material for adhering to an adjacent voxel; wherein the matrix of printed voxels applies a force to one or more teeth of the set of teeth causing the one or more teeth to shift into a second teeth alignment; the matrix of printed voxels comprises first voxels (212) and connected second voxels (230), wherein a number of the connected second voxels (230) separate each first voxel (212), and where the number of connected second voxels (230) determines the rigidity of an aligner (100) in one or more spatial directions, and, when taken together, the first voxels (212) and the number of connected second voxels (230) forms a singular or dynamic material flexural characteristic or elastic modulus.

## Description

### BACKGROUND

Dental appliances for straightening teeth are increasingly constructed of a clear, thermoformed polyurethane rather than metallic-based "braces." Such appliances or "aligners" have a uniform elasticity and toughness throughout their thermoformed material. By creating a set of aligners that have incremental changes in dimensions/tooth receiving portions, teeth can be urged along a treatment plan in an incremental fashion, over time. In use, a patient will periodically introduce a new appliance in seriatim fashion as a way to move teeth in accordance with the treatment plan.

The present disclosure is directed to a dental appliance having customized material stress properties at a voxel level. By utilizing voxel-based formation technologies (e.g., three-dimensional printing), static and dynamic stress forces may be customized to a patient's specific needs in order to incrementally move teeth from an initial tooth arrangement to a final tooth arrangement in a more cost effective and efficient manner. The present disclosure further includes a method for determining one or more aligners having volumetric voxel arrangements for conditioning the initial tooth arrangement to the final tooth arrangement according to the treatment plan. The appliances and methods of the present disclosure allow for providing a custom elasticity and toughness at each spatial and temporal portion of their treatment plan.

US 2014/315153 A1 describes a method in which a computational device generates a design of a negative mold of teeth.

US 2013/204583 A1 describes a method which includes receiving initial orthodontic data (IOD) including teeth data; creating a virtual set of teeth from the IOD; receiving dental appliance information including at least one of dental appliance material properties and characteristics; virtually placing a dental appliance, formed from the dental appliance information, onto the virtual set of teeth; and determining one or more forces applied to the teeth based on information from the IOD and dental appliance information.

WO 2018/195554 A1 describes a method which includes receiving data identifying approximate locations of individual teeth in a three-dimensional digital dental model representing an impressioned position of a patient's dentition. The example method may also include generating component models corresponding to individual teeth for each of the identified approximate locations.

### SUMMARY

The invention is defined by the features of the independent claims.

The forgoing general description of the illustrative implementations and the following detailed description thereof are merely exemplary aspects of the teachings of this disclosure, and are not restrictive.

In an illustrative embodiment, a dental appliance is provided including a matrix of printed voxels having a three-dimensional shape of a dental arch for surrounding a set of teeth corresponding to a first teeth alignment of a patient, the shape of the dental arch having a lingual side, an occlusal surface, and a facial side, where each voxel includes one or more deposited materials for adhering to an adjacent voxel, and where the matrix of printed voxels applies a force to one or more teeth of the set of teeth causing the one or more teeth to shift into a second teeth alignment.

In an illustrative embodiment, the matrix of printed voxels includes one or more sections of variable elasticity, where each section of variable elasticity applies a local force to the one or more teeth of the set of teeth causing the one or more teeth to shift.

In an illustrative embodiment, the matrix of printed voxels includes a soft layer made from a softer material for interfacing with a tissue of the patient (e.g., gingiva).

In an illustrative embodiment, the matrix of voxels has one or more voxels formed from a first resin with a first durometer and one or more voxels formed from a second resin with a second durometer.

In an illustrative embodiment, the first durometer is considered hard and the second durometer is considered soft.

In an illustrative embodiment, at least one of the first resin and the second resin has a distinguishing color.

In an illustrative embodiment, at least a portion of the first resin and the second resin are mixed prior to curing.

In an illustrative embodiment, the matrix of printed voxels includes one or more connectors for inducing a stress between disjoint voxels.

In an illustrative embodiment, at least one of the one or more connectors is acting on a lingual side of the dental arch to effect tooth movement.

In an illustrative embodiment, at least one of the one or more connectors is forming a stress between a lingual side of a tooth and a facial side of at least one of the tooth and another tooth.

In an illustrative embodiment, at least one of the one or more connectors is forming a compressive member that is pushing and/or rotating teeth apart.

In an illustrative embodiment, a system for printing a dental appliance includes a printer having processing circuitry for receiving printing instructions for printing a matrix of individual voxels in a 3D shape of a dental arch based on a first teeth alignment of a patient, a positioner for moving in 3D space according to the printing instructions, a print head assembly, securing to the positioner, including one or more print heads, each print head for depositing a material at a voxel location, a shaper (e.g., roller) for shaping the deposited material, and a conditioner (e.g., heater/cooler, spray, UV light) for conditioning the deposited material.

In an illustrative embodiment, the positioner includes a mount for traveling along a first rail on an x-axis and a second rail on a y-axis, and the print head assembly is secured to the mount for moving back and forth along each rail by belts positioned by motors.

In an illustrative embodiment, the positioner includes a robotic arm for positioning the print head assembly in 3D space in any orientation.

In an illustrative embodiment, the system further includes a medical imaging system for determining the first teeth alignment of a patient; and where the medical imaging system is in communication with the printer.

In an illustrative embodiment, a method of forming one or more aligner devices includes receiving a first teeth alignment; identifying an arrangement of second teeth alignment based on the first teeth alignment; determining one or more aligners for conditioning the first teeth alignment to the second teeth alignment, each aligner having a volumetric voxel arrangement; and determining printing instructions for printing each aligner with a respective volumetric voxel arrangement.

In an illustrative embodiment, the method further includes printing each aligner based on the printing instructions.

In an illustrative embodiment, printing each aligner further includes depositing one or more droplets of first material at a first position (x,y,z) of a matrix of voxels; compacting all deposited droplets in a deposited layer; and providing conditioning (e.g., UV light) to all deposited droplets.

In an illustrative embodiment, determining the volumetric voxel arrangement of each aligner includes determining, for each aligner, a number of iterative stresses required to cause the arrangement of second teeth alignment; determining, for each portion of aligner, a partial elastic modulus for inducing a respective stress of the iterative stresses; and determining, for each portion of aligner, a volumetric voxel arrangement having the partial elastic modulus.

In an illustrative embodiment, determining the volumetric voxel arrangement of each aligner further includes selecting a first resin and a second resin, where a mixture of the first resin and the second resin forms the partial elastic modulus.

### BRIEF DESCRIPTION OF THE SEVERAL VIEWS OF THE DRAWINGS

The accompanying drawings, which are incorporated in and constitute a part of the specification, illustrate one or more embodiments and, together with the description, explain these embodiments. The accompanying drawings have not necessarily been drawn to scale. Any values dimensions illustrated in the accompanying graphs and figures are for illustration purposes only and may or may not represent actual or preferred values or dimensions. Where applicable, some or all features may not be illustrated to assist in the description of underlying features. In the drawings:
FIG. 1A is a perspective view of an aligner device in accordance with an exemplary embodiment;
FIG. 1B is a perspective view of a molar tooth showing a portion of the aligner device of FIG. 1A;
FIG. 1C is an enlarged view of the portion of the aligner of FIG. 1B including a matrix of printed discrete volume of materials according to an exemplary embodiment;
FIG. 1D shows a cross section view of the aligner device of FIG. 1A having an interface layer abutting a portion of gingiva of the patient in accordance with an exemplary embodiment;
FIG. 2A is a cross section view of the portion of the aligner of FIG. 1B showing an exemplary matrix of voxels;
FIG. 2B is a cross section view of a portion of the aligner of FIG. 1B showing an exemplary second matrix of voxels;
FIG. 2C is a cross section view of a portion of the aligner of FIG. 1B showing an exemplary third matrix of voxels;
FIG. 3A is a perspective view of two molar teeth, a portion of an aligner structure contacting each molar, and a rod/connector forming a force strap between the two molars according to an exemplary embodiment;
FIG. 3B is an enlarged perspective view of the rod/connector of FIG. 3A isolated from the aligner wall according to an exemplary embodiment;
FIG. 4 is an enlarged perspective view of a rod/connector isolated from the aligner wall of FIG. 3A, where the rod/connector includes a number of core layers according to an exemplary embodiment;
FIG. 5 is a plan view of an aligner having one or more connectors according to an exemplary embodiment;
FIG. 6A is a block diagram of an exemplary system for directly printing an aligner according to an exemplary embodiment;
FIG. 6B is a hardware block diagram of control circuitry of the system according to an exemplary embodiment;
FIG. 6C is a perspective view of a 3D printer having a print head assembly configured to print an aligner according to an exemplary embodiment;
FIG. 7A is a perspective view of a printed layer of a portion of an exemplary aligner device according to an exemplary embodiment;
FIG. 7B is a top view of the printed layer portion of FIG. 7A illustrating material droplets deposited in predetermined voxels according to an exemplary embodiment;
FIG. 7C is a side-view of the printed layer portion of FIG. 7A illustrating non-uniform shapes of the droplets of material deposited according to an exemplary embodiment;
FIG. 7D is a side-view of a shaper device compressing the non-uniform shapes of the droplets of FIG. 7C into uniform shapes according to an exemplary embodiment;
FIG. 8A is a flowchart of an exemplary method for forming an aligner device having a patient specific voxel arrangement according to an exemplary embodiment;
FIG. 8B is a flowchart of an exemplary method for determining a volumetric voxel arrangement of each aligner; and
FIG. 8C is a flowchart of an exemplary embodiment of a method of forming one or more aligner devices having a patient specific voxel arrangement in accordance with an exemplary embodiment based on the printing instructions.
FIG. 9 depicts a printing method of an exemplary embodiment of producing curvilinear bodies and surfaces with stair-stepping voxels with control of what material is included in each voxel.

### DETAILED DESCRIPTION

The description set forth below in connection with the appended drawings is intended to be a description of various, illustrative embodiments of the disclosed subject matter. Specific features and functionalities are described in connection with each exemplary embodiment; however, it will be apparent to those skilled in the art that the disclosed embodiments may be practiced without each of those specific features and functionalities.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments. Further, it is intended that embodiments of the disclosed subject matter cover modifications and variations thereof.

It must be noted that, as used in the specification and the appended claims, the singular forms "a, " "an," and "the" include plural referents unless the context expressly dictates otherwise. That is, unless expressly specified otherwise, as used herein the words "a," "an," "the," and the like carry the meaning of "one or more." Additionally, it is to be understood that terms such as "left," "right," "top," "bottom," "front," "rear," "side," "height," "length," "width," "upper," "lower," "interior," "exterior," "inner," "outer," and the like that may be used herein merely describe points of reference and do not necessarily limit embodiments of the present disclosure to any particular orientation or configuration. Furthermore, terms such as "first," "second," "third," etc., merely identify one of a number of portions, components, steps, operations, functions, and/or points of reference as disclosed herein, and likewise do not necessarily limit embodiments of the present disclosure to any particular configuration or orientation.

Furthermore, the terms "approximately," "about," "proximate," "minor variation," and similar terms generally refer to ranges that include the identified value within a margin of 20%, 10% or preferably 5% in certain embodiments, and any values therebetween.

Aspects of the present disclosure are directed to a dental appliance and a method for forming a dental appliance in which the dental appliance is represented by generating a voxel-based three-dimensional computer readable model of the dental appliance. In some implementations, a voxel is an element representing three-dimensional space (volume pixel). A three-dimensional printable item may be represented in a three-dimensional computer readable model through defining a matrix of voxels. The matrix of voxels may include a single material, or neighboring voxels can include different materials. For example, a process for forming the dental appliance may include three-dimensional printing of a matrix of individually-printed volumes of different materials in a pattern to customize structural properties of the dental appliance for a specific use. In some examples, each voxel of the three-dimensional computer readable model can be printed as a discrete volume of material having a width, height, and length. In some implementations, each printed discrete volume of material can be conditioned after dispersion to conform to an attribute of a respective voxel. In an example, conditioning can include UV treatment, heating/cooling, or mechanical molding such as flattening.

In some implementations, a dental appliance can be formed to have variable stiffness in a variety of ways. The dental appliance can be configured to have variable stiffness by depositing different patterns of two or more materials. In an example, the two or more materials can be configured to interact prior to curing, resulting in a varying elastic modulus. In another example, the dental appliance can be configured to have variable stiffness by including one or more rods/connectors, which form a force strap between two spatially separate areas.

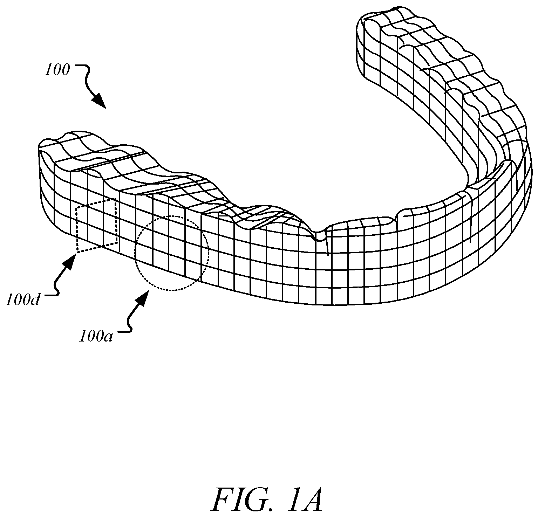

FIG. 1A is a drawing of a perspective view of an appliance shown as an aligner 100 according to a preferred embodiment. In an aspect, the aligner 100 is made up of a matrix of discrete volumes of material, where each printed discrete volume of material is associated with a voxel. In some implementations, a voxel is a digital interpretation of a 3D printed item. When describing 2D pictures (e.g., office copiers/printers, computer screens, televisions), a smallest discrete element of color is called a pixel. With respect to 3D printers, a smallest discrete volume of material may be considered to be a volumetric pixel or voxel. When applicable, each printed discrete volume of material can be referred to by its associated voxel.

In some implementations, the aligner 100 is formed from a matrix of intermixed discrete volumes (or voxels) of one or more different types of material. In an example, an aligner can range in thickness from 0.010-0.030 inches or 250-750 microns, which can correspond to approximately 5-15 layers of thickness of 50 micron voxels. In an example, two types of clear resin (e.g., soft/hard) that are biocompatible can be printed or laid down at the same time. In an example, one or more aligner materials can include a minimum of two biocompatible resins that each have a unique Durometer. A Durometer is a descriptor that provides an indication of hardness of elastomeric and plastic materials ranging from soft rubber to rigid plastics. In some implementations, materials to be used in fabricating the aligner 100 may vary in hardness from approximately as hard as bone to approximately as soft as rubber bands. In an example, a first resin can have a first Durometer, which is considered hard, and a second resin can have a second Durometer, which is considered soft. Example materials of a first resin (hard) can be from a family of acrylics. Example materials of a second resin (soft) can be from the group of materials known as elastomeric polymers, commonly referred to as rubber. In an aspect, the first and second resin can have different consistencies, depending on a desired movement to achieve the treatment plan.

In an aspect, multiple unique materials can be printed in a designed matrix to achieve equivalent or superior performance to thermoformed polyurethane aligners to achieve a balance of rigidity and flexibility. Due to the nature of service, an aligner may require a combination of toughness and elasticity to provide durability while applying a motive force to urge the teeth of the wearer to a corrected position. For example, an aligner toughness can be characterized by having a body strength and a stiffness (hard durometer) so as to not be damaged from compression when a wearer is biting down. Additionally, the elasticity of an aligner material can be a basis for applying a motive force to pull or push the teeth of the wearer into a corrected position. In another aspect, the material properties of the aligner can be tailored based on how each printed material is mixed and positioned within the aligner 100.

When fabricating aligners from a single material and applying uniform conditioning to the printed material, the aligner may exhibit uniform characteristics throughout a body of the material. In another example, an aligner can be fabricated having a matrix of intermixed voxels having varied material characteristics, and the material characteristics of the aligner in specific parts of the aligner can be modified to achieve a preferred behavior. In some examples, to provide greater toughness at occlusal surfaces, an aligner can be fabricated having a disproportionate amount of higher durometer material located at the occlusal surfaces that may be subjected to higher amounts of compressive force than other surfaces of the aligner. In another example, an edge of an aligner interfacing with a patient's gingiva may need greater elasticity and flexibility in order to not deform the patient's gingiva and cause discomfort. There are many other needs that can be met or greatly optimized by virtue of designed and selective placement of a given durometer of material for a respective intended purpose.

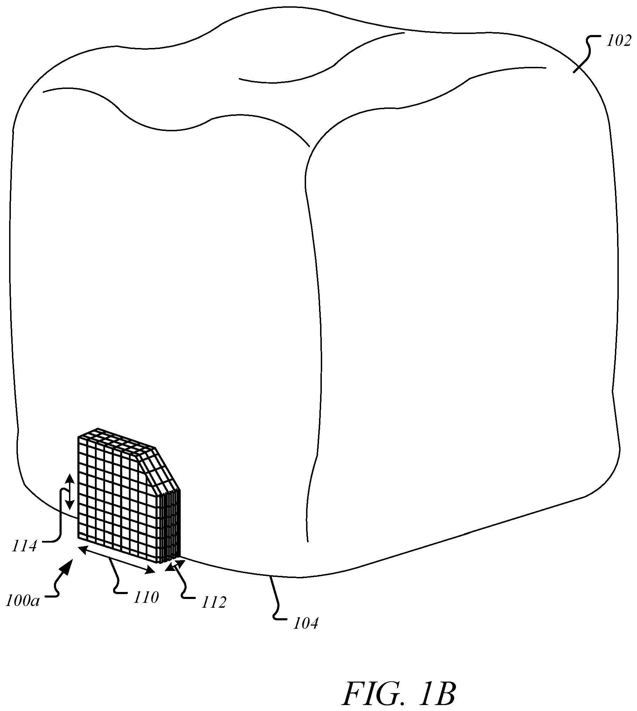

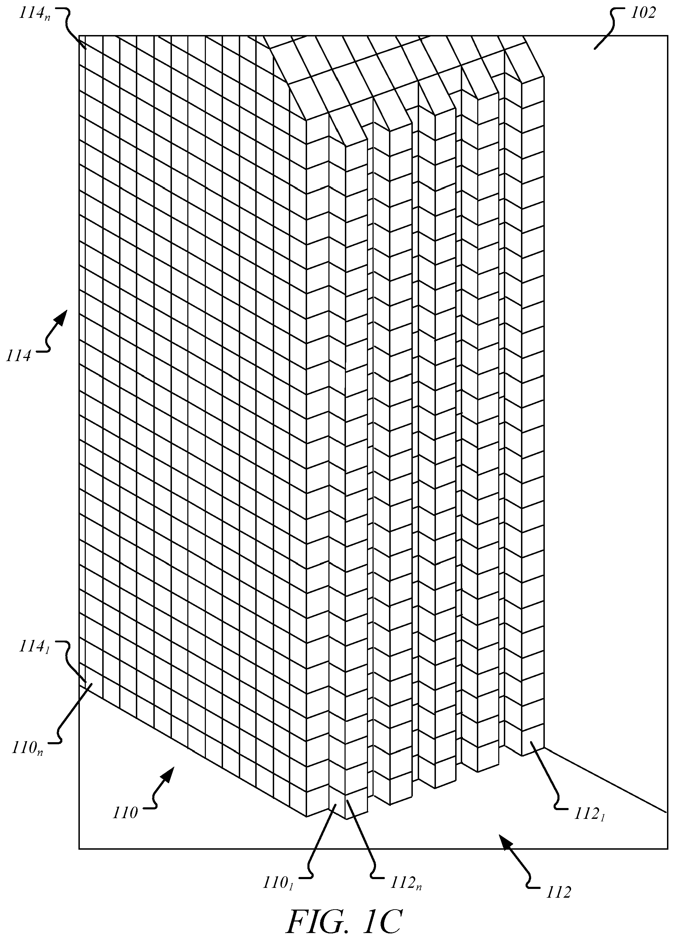

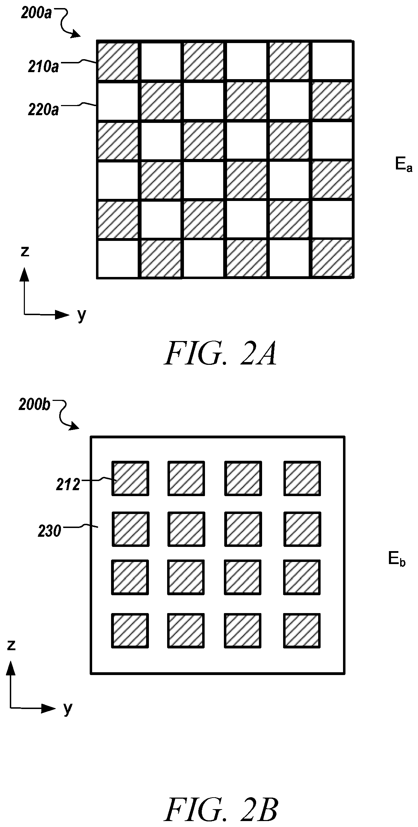

FIG. 1B is a perspective view of a molar tooth 102 and a portion 100a of the aligner 100 according to an exemplary embodiment. For tautological purposes, the molar tooth 102 is depicted as a cube with approximately 10 mm per side. The portion 100a of the aligner 100 is shown having a number of length-aligned voxels 110, a number of width-aligned voxels 112, and a number of height-aligned voxels 114. A drawing of an enlarged view of the portion 100a of the aligner is shown in FIG. 1C including a matrix of voxels according to an exemplary embodiment. (See also FIGs. 2A-2C). In an exemplary embodiment, the aligner can be printed using a commercially available printer such as a Polyjet printer from Stratasys, Ltd. (Billerica, MA). In an aspect, a relative scale of print resolution and concepts of using a Polyjet printer to print appliances is shown with two different resins: a first resin with a soft Durometer for elasticity and a second resin with a hard Durometer that provides toughness. In another aspect, with individual voxel control, teeth movement planning can be expanded and executed with a finer resolution and higher predictability of movements.

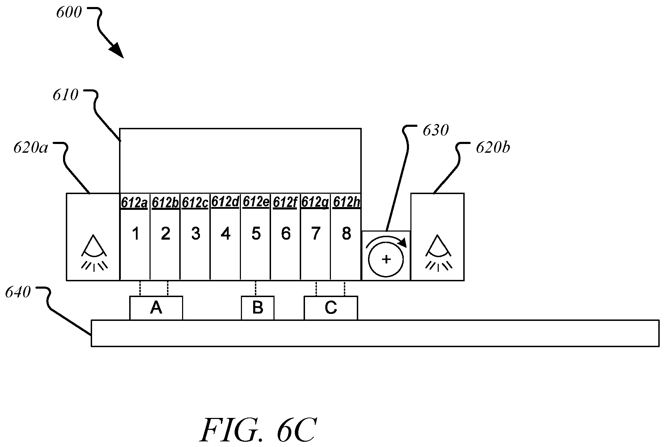

In an example, the printer can have multi-material printing capability for tuning the structural properties and material performance of the aligner by adjusting a distribution of different types of voxels throughout the aligner. (See also FIG. 6C). In an aspect, the structural properties of the aligner can be configured to match individual patient treatment needs. In some cases, patients may require relatively greater force and more specific targeting of force application in order to achieve an intended movement of a tooth or group of teeth. For example, rotating a tooth without translating it along a jawline is an example of how application of targeted forces can achieve a tooth correction that is otherwise nearly impossible with current dental appliances. Other examples include rolling a tooth, lifting a tooth, or other more complicated movements that can be achieved with brackets/wires or orthodontic treatment methods, but not with traditional aligners. In an illustrative embodiment, one or more portions of the aligner can include a portion of the matrix of voxels for retention/anchorage of the aligner to the teeth of the patient. For example, an anchoring portion of the matrix of voxels can surround a lingual/buccal power ridge to secure to one or more teeth of the patient. Another portion of the matrix of voxels can move relative to the anchoring portion of the matrix of voxels.

In an illustrative embodiment, one or more portions of the aligner can include functional portions of the matrix of voxels for forming orthodontic aids such as a bite ramp (not shown) and a wing for serving as an anchor point for an elastics band.

### Materials

In an illustrative embodiment, the aligner 100 can be formed from one or more aligner materials. In an example, the aligner materials are preferably biocompatible and can be configured to be laid down at the same time. Examples of aligner materials include polyurethanes (e.g., Isoplast), epoxies, and metals. In an example, the aligner material can be clear or colored to allow for printed aligners with designs in them instead of a uniformly clear part such as U.S. Pat. Pub. US20120270173A1 by Pumphrey et. al., titled "Aligners for incrementally moving teeth, and methods and apparatus of making and using such aligners." In an example, the aligner material can be configured to have a highly visible color for things like part marking (e.g., 2D graphics, bar codes, logos/labels) and visual identification of which tooth is being treated (e.g., dot on lingual side). In an example, the aligner material can be configured to have two distinctly different colors of resin to visually verify each voxel intended for a given print.

In one example, each voxel may be made of only one type of material. In an exemplary embodiment, a printer can be configured to mix multiple materials within a voxel. In another exemplary embodiment, a standard voxel can be subdivided into multiple voxels of smaller size. For example, a standard voxel can be subdivided into two, four or eight sub-voxels of smaller size.

### Soft Edge Layer

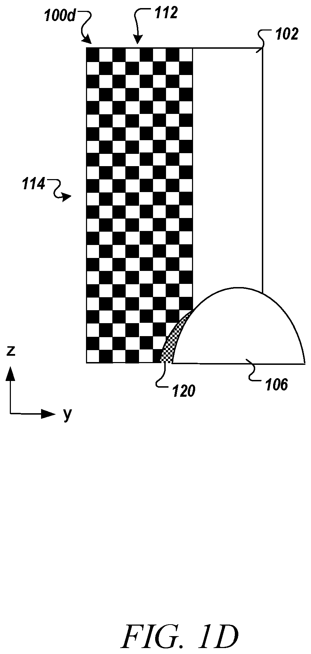

FIG. 1D shows a cross section view of a portion of an aligner 100d having a soft edge layer 120 configured to interface with a gingiva 106 of the wearer. In an example, an inner portion of the aligner 100 can be configured to interface with a gingiva and/or a gingiva-tooth interface 104 (FIG. 1B). In an aspect, the soft edge layer 120 is configured to provide comfort to the wearer of the aligner, which may be judged based on the interaction between an aligner edge and the gingiva. In an example, the soft edge layer 120 can be made from a softer, more compliant material that can be positioned along an edge of an aligner such that the aligner is comforting and fully conforming to the shape of a wearer's gingiva at any hour, day or week of wear. With direct control over material placement, the aligner edge can be configured to be rounded with a full radius, in machining terms. In an example, the soft edge layer 120 can provide a bottom 1-2 mm of gingiva coverage, or designed in whatever manner is needed to afford a fully conforming and comfortable fit. In an example, the soft edge layer 120 is placed on both the lingual and facial sides of the aligner covering each interface with the gingiva.

In some implementations, an aligner can be made from a matrix of voxels, where each voxel can be made from one or more aligner materials. FIG. 2A is a drawing of a cross section of a portion of the aligner made from a matrix of voxels 200a including a number of first voxels 210a and a number of second voxels 220a according to an exemplary embodiment. In an example, each voxel can be a single printed droplet which is disposed in a predetermined position. In an aspect, each first voxel 210a and second voxel 220a is formed from a singular material having a singular material flexural characteristic or elastic modulus. Taken together, the first voxel 210a and the second voxel 220a can have an effective elastic modulus Ea.

In some implementations, an aligner can be made from a matrix of voxels 200b including a number of first voxels 212 and a number of connected second voxels 230, where a number of connected second voxels separate each first voxel according to an exemplary embodiment. (See FIG. 2B). In an aspect, the number of connected second voxels 230 can determine a rigidity of the aligner in one or more spatial directions. In an aspect, each number of connected second voxels that separate each first voxel can form a singular or dynamic material flexural characteristic or elastic modulus. Taken together, the first voxels 212 and the number of connected second voxels 230 can have an effective elastic modulus Eb.

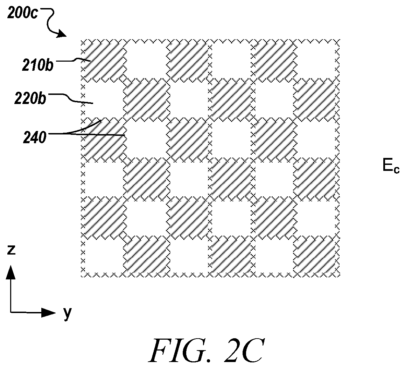

In some implementations, an aligner can be made from a matrix of voxels 200c, where each adjacent voxel can interact prior to curing. FIG. 2C is a drawing of a cross section of a portion of the aligner made from a matrix of voxels 200c including a number of first voxels 210b and a number of second voxels 220b, where each voxel shares a mixed border 240 with at least one other voxel according to an exemplary embodiment. In some implementations, each adjacent voxel can interact chemically prior to curing. For example, a first material can be deposited to form a first voxel 210b of the number of first voxels 210b and a second material can be deposited adjacent to the first voxel 210b to form a second voxel 220b of the number of second voxels 220b. In an example, the mixed border 240 can form between the deposited first and second materials prior to curing. Based on each material and curing process, the mixed border 240 can have different mechanical properties. Taken together, the first voxels 210b, the second voxels 220b, and the mixed border 240 can have an effective elastic modulus Ec.

In some implementations, each adjacent voxel can interact mechanically prior to curing. In an example, the shaper and/or a printer platform can shape each adjacent voxel to interact mechanically prior to curing. In an exemplary embodiment, at least one of the shaper and the printer platform can exert a vibration to the deposited first and second materials prior to curing such that the deposited first and second materials form a non-planar interface at the mixed border 240. In an aspect, the mixed border 240 formed from two materials can have a singular material flexural characteristic or elastic modulus that can be determined by testing and stored in a look-up table for designing.

### Rod/Connector

In some implementations, an aligner can include one or more rod/connectors configured to introduce a dynamic stress within the aligner to lift, tilt or twist a tooth to a corrected position. In an aspect, the dynamic stress can enhance movement of one or more teeth. In an example, a rod/connector can be a functional grouping of intermixed voxels that extend from one anchor tooth to the targeted tooth for movement.

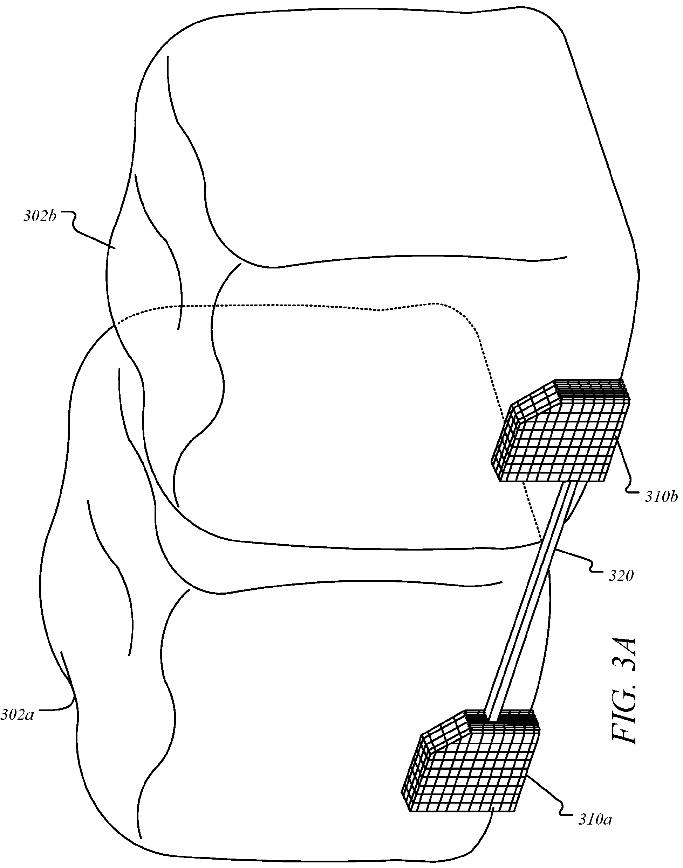

Turning to FIG. 3A, a first molar 302a is shown with a first portion 310a of an aligner wall contacting the first molar 302a, a second molar 302a with a second portion 310b of an aligner wall contacting the second molar 302b, and a rod/connector 320 within the aligner forming a force strap between the two molars 302a-b according to an exemplary embodiment. In an example, the rod/connector 320 can be configured to form a tension strap to provide tension between the two molars 302a-b.

In an example, each rod/connector can have a volumetric voxel arrangement from a single elastic material with a single elastic modulus and/or Durometer. In another example, each rod/connector can have a volumetric voxel arrangement from two or more materials, where each material can have a unique elastic modulus and/or Durometer. In an aspect, the volumetric voxel arrangement can form a crystalline matrix or lattice structure as needed to achieve macro material properties even as specifically designed features are micro structures of organized voxels. In an example, the volumetric voxel arrangement can form a crystalline matrix that is structurally organized as a Face Centered Cubic (FCC) and a Body Centered Cubic (BCC), as well as other ways of describing how matter is composed at an atomic level.

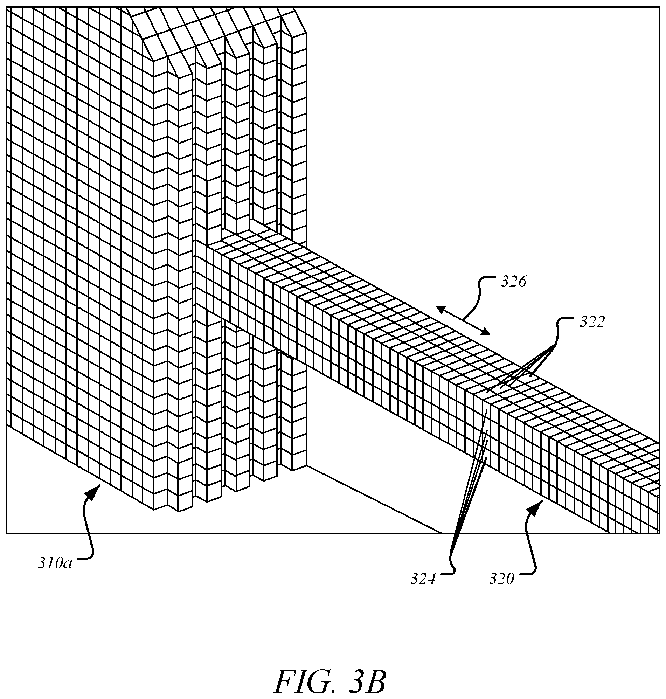

As shown in FIG. 3B, in some implementations, the rod/connector 320 can include a volumetric voxel arrangement having a number of width-aligned voxels 322, a number of height-aligned voxels 324, and a number of length-aligned voxels 326. In an example, each rod/connector 320 can terminate with an anchoring feature to surrounding voxels (not shown).

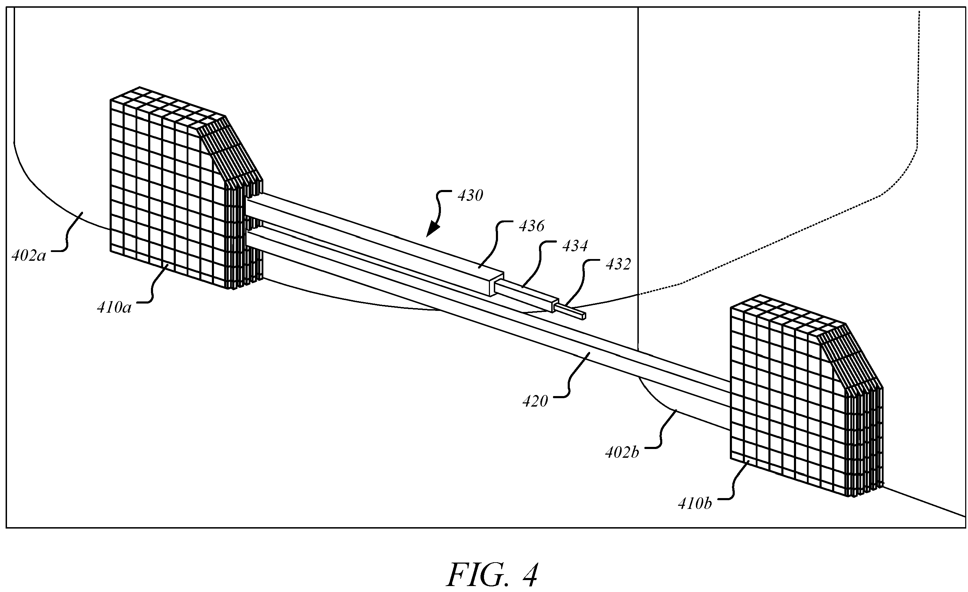

In some implementations, a rod/connector can include a number of core layers, according to an exemplary embodiment. FIG. 4 shows a first molar 402a with a first portion 410a of an aligner wall contacting the first molar 402a, a second molar 402b with a second portion 410b of an aligner wall contacting the second molar 402b, a rod/connector 420, and a rod/connector 430 including a number of core layers 432-436 within the aligner forming a force strap between the two molars 402a-b according to an exemplary embodiment. In an example, each core layer of the number of core layers 432-436 can have a unique elastic modulus and/or Durometer. In an example, each rod/connector 320 can terminate with an anchoring feature to surrounding voxels. In an aspect, the volumetric voxel arrangement of each rod/connector 420/430 can be configured to have a specific moment of inertia in a particular direction. For example, an amount of bending and/or torsion in a particular direction can be designed based on a particular application.

In some implementations, 3 or 4 materials can be printed, where the force straps can have a stiffer core with one, two or more progressively softer, more elastic concentric wraps/coatings of material, making a structure like a leaf spring, or a multi-axial variable force member depending on degree of deflection. In an example, these stiffer force bands can be arranged in any orientation, in any combination to effect specific movements of teeth. In an example, the force strap can be printed with individual voxel control with different materials (resins) available to be dispensed to create one or more types of stresses. For example, a force strap can be configured to provide a tensile force. In another example, a force strap can be configured to provide a compressive force.

Each rod/connector or force strap can be positioned on one or more sides of a dental arch (e.g., facial, lingual, buccal, occlusal surface). In an example, a force strap can be positioned within a body of the aligner from a lingual side of one tooth, up and over an occlusal surface to reach over to a facial side of an adjacent tooth to accomplish an intended adjustment in attitude. In an example, a balanced force strap pull arrangement can be achieved with one or more tensile straps running up and over occlusal surfaces to a facial side attachment of a middle tooth in a group of three adjacent teeth.

In some implementations, one or more adjacent voxels surrounding a rod/connector can be absent or made from a highly compliant material as to not obstruct a force and/or tension of targets or intended areas in communication with the rod/connector (e.g., one or more sides of a dental arch). In another example, one or more adjacent voxels surrounding a rod/connector can enhance a force and/or tension by serving as a fulcrum.

In some implementations, a portion of each end of a rod/connector can be exposed to a surface of the aligner for determining a conductivity of the rod/connector. In an aspect, the conductivity of the rod/connector is used for determining a performance, a status along the treatment plan, and a mechanical attribute of a portion of the aligner.

### Connector Configurations

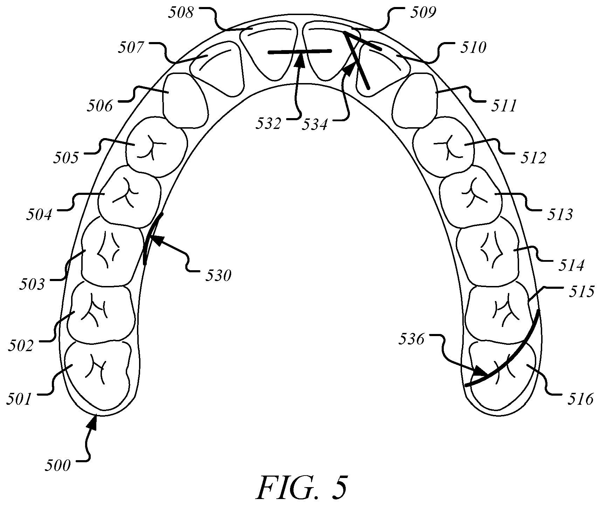

FIG. 5 is a drawing of a top view of a printed aligner 500 having one or more connectors 530-536 according to an exemplary embodiment. The printed aligner 500 is shown positioned over a set of teeth 501-516 corresponding with a tooth alignment. Each connector 530-536 can be configured to apply a unique type of stress/strain on one or more teeth of the set of teeth 501-516 according to an exemplary embodiment. In an example, a connector 530 that can apply a stress/strain on sidewalls of adjacent teeth 503-504. Currently, orthodontic based treatments with brackets/wires are only applied to a facial side of a dental arch.

With control of materials used for each voxel, tension rods can be incorporated into the aligner that apply specifically designed forces to act on one or more sides of the dental arch to effect tooth movement. In an example, a tensile bar 530 is configured to rotate tooth 504 clockwise, while pulling tooth 503 counterclockwise, and drawing tooth 503 and tooth 504 together. In another example, a connector or force rod 532 is shown configured to apply a stress/strain over an occlusal surface of adjacent teeth 508-509. Rods constructed within the body of an aligner can be either tensile or compressive, depending on how they are shaped and deformed as the dental appliance is installed. Force rod 532, when tensile, is configured to pull/rotate the lingual sides of teeth 508 and 509 together. During installation of the dental appliance, when the force rod 532 is arched/deformed, the force rod 532 can be a compressive member that pushes/rotates teeth 508 and 509 apart.

In an example, a connector or force rod 534 is shown that applies a stress/strain in two directions between adjacent teeth 509-510. In this case, the force rod 534 is an example of a multi-force rod arrangement configured to achieve a balanced force; such as tipping tooth 509 to a distal end of the dental arch without rotating. In another application, depending on how the force rods are designed and built, force rod 534 can cooperate with force rod 532 to plunge tooth 509 downward while rotating tooth 509 clockwise. Combined connector force applications can dramatically increase the speed and accuracy of correcting locations of the teeth. In an example, a connector 536 is shown that applies a stress/strain over opposite corners of an occlusal surface of a tooth 516. In an example, the connector 536 can be considered as a force strap in that a lingual side of tooth 516 is pulled towards a facial base of 515. A combined connector effect can be configured to roll a tooth 516 from a lingual side to a facial side while tipping the tooth 516 forward and driving tooth 516 into tooth 515, according to an example.

In an aspect, a rod/connector can act as a distalizer.

### System for Directly Printing an Aligner

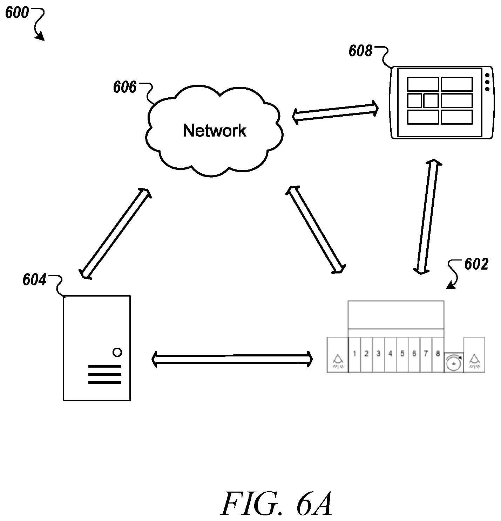

FIG. 6A illustrates a system 600 for directly printing an aligner according to an exemplary embodiment. The system 600 for directly printing an aligner can include a printer 602 in communication with a remote computing system (e.g., desktop computer, server) 604 having processing circuitry. In an example, the printer 602 can be connected directly to the remote computing system 604 or through a network 606. In some implementations, the system 600 can include a medical imaging system 608 (e.g., X-ray machine, optical scanner) configured to acquire images and/or orientations/alignments of a patient's tissues (e.g., gingiva) and teeth. In some implementations, the medical imaging system 608 can be configured to acquire a physiological condition of the patient's gingiva, which may affect the maneuverability of one or more teeth. In an example, when a treatment plan is presented for a review, the dental professional has an opportunity to identify particular aspects of any given dentition, such as gum tissue condition, strength of teeth or other aspects of patient limitations/sensitivities (e.g., sensitive teeth, crowns, implants, bleeding gingiva). These deviations from the standard dentition can be factored in by configuring the aligner to modify a rate of tooth movement and selecting a safe force application as opposed to selecting locations of force that represent higher risk to damaging existing teeth or surrounding bone.

The printer 602 can be connected directly to the medical imaging system 608 or through the network 606. In an example, the system 600 can include a layout module configured to determine placement of each connector within the aligner. In an example, the system 600 can include a printer type module configured to adapt the printer instructions to a printer's capabilities. For instance, a printer having an added UV exposure feature may require fewer passes to cure a deposited material. In an example, the layout module and the printer type module can be part of the remote computing system 604.

The system 600 or the printer 602 can include control circuitry configured to load /control dispersion of resin materials to the print head assembly. Resin is presented to the printer via supply cartridges, where each cartridge is a singular type of resin. The cartridges are loaded into a cabinet that is connected to the printer 602 which can either be configured manually or let the control circuitry detect which resin is located in which location within the cabinet. Depending on what type of aligner is being printed, the control circuitry can manage which resin is routed to a respective print head for dispensing during printing.

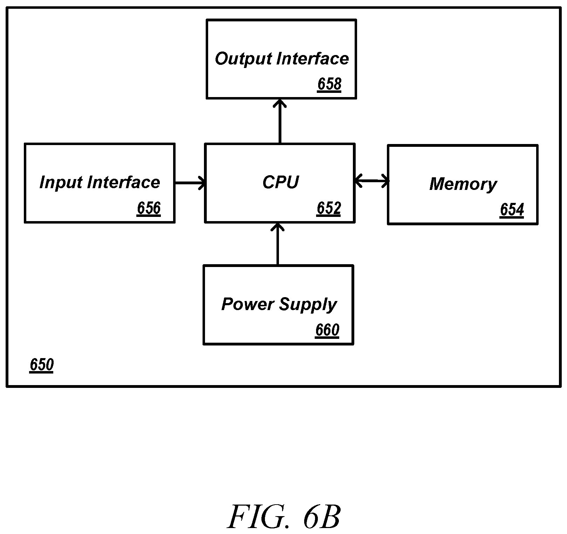

FIG. 6B provides a simplified hardware block diagram of control circuitry 650 of the system 600. The control circuitry 650 may be part of the printer 602 or distributed with the remote computing system 604. The description of the control circuitry 650 is not meant to be limiting and can include other components than those described herein. References to control circuitry 650 relate to the circuitry of one or more processing circuits, which can also be referred to interchangeably as processing circuitry. The control circuitry 650 may include a central processing unit (CPU) 652 that executes one or more software processes associated with the system 600. Software instructions for the processes can be stored in memory 654.

In some examples, the memory 654 can include both volatile and non-volatile memory and can store various types of data associated with executing the processes related to storing tables. For example, the memory 654 can be used to store the look-up tables for material flexural characteristics and elastic moduli, digital representations of the patient's teeth, material property values of available resins, structural mechanics equations for different types of structural stresses and loading, and governing rules and parameters for arranging teeth.

The control circuitry 650 includes an input interface 656 for communicating with various devices that provide configuration and settings inputs to the control circuitry 650 such as the remote computing system 604, the network 606, and the medical imaging system 608 as well as any other device associated with the system 600. The control circuitry 650 also includes an output interface 658 for connecting and providing information to devices 640 communicating with the control circuitry 650 including the remote computing system 604, the network 606, and the medical imaging system 608 as well as any other device communicating with the control circuitry 650. The control circuitry 650 also includes a power supply 660, such as a battery connection or wired connection to an electrical power source. Further, the control circuitry 650 includes one or more communication interfaces 612, which may include wireless messaging interfaces, that enable the control circuitry 650 to collect sensor signals supplied by auxiliary sensors. For example, sensors can provide positioning information from the mount, the traveling arm, and the robotic arm, as well as detect which resin is located in which location within the cabinet.

In some implementations, the memory 654 of the control circuitry 650 includes instructions for executing one or more engines or modules that perform processes associated with determining printing instructions for printing an aligner, identifying an arrangement of a second teeth alignment based on the first teeth alignment, and determining of each volumetric voxel arrangement of each aligner.

In some implementations, short range wireless communication is provided through Bluetooth wireless communication technology. In other embodiments, Ultra Wide Band (UWB) or ZigBee wireless communications may be used. The type of wireless communication technology that is used for the implementations described herein can be based on various factors that can include battery life, data usage, security and/or line-of-sight restrictions, and other concerns. In some embodiments, ZigBee or Bluetooth wireless communications may be used in applications where link security is prioritized. In other embodiments where frequency interference is a concern, Bluetooth or UWB communications may be used since both technologies use adaptive frequency hopping to avoid channel collision. In embodiments where a total of frequency channels is prioritized, Bluetooth wireless communications may be used.

FIG. 6C illustrates a printer 602 having a print head assembly 610 configured to print an aligner according to an exemplary embodiment. In some implementations, the print head assembly includes one or more print heads, a shaper (e.g., roller), and a conditioner which determine placement and curing of resin. In an exemplary embodiment, the conditioner is at least one of a UV light, a heater, a cooler, and an activating agent (e.g., gas/spray) responsive to a respective resin. In an exemplary embodiment, the print head assembly 610 includes multiple print heads where each print head is capable of dispensing a different resin. In an example, one or more of the multiple print heads can be configured to dispense or deliver the same resin. In another example, each print head can be configured to print a unique resin where each resin can have unique material properties including different colors and Durometers. In an exemplary embodiment, multiple print heads can be in communication with a shared reservoir configured to store a first resin.

In an exemplary embodiment, the print head assembly 610 is moved by any number of computer controlled mechanical means and actuators (e.g., leadscrew, belts, gearing and lever arms, etc.). The printer 602 can include a frame including rounded shafts, profiled rails, telescopic slide rails with ball bearings, and any other forms of controlled guidance of the print head assembly 610. In an exemplary embodiment, the printer 602 can include a mount or carriage (not shown) configured to travel along a first rail on an x-axis (left to right) and a second rail on a y-axis (front to back). The print head assembly 610 can be configured to secure to the mount to move back and forth along each rail and to be positioned by motors relative to a printer platform 640. In another exemplary embodiment, the printer 602 can include a robotic arm having multiple joints, where the print head assembly 610 can secure to the robotic arm (not shown). In an aspect, the robotic arm can position the print head assembly in 3D space in any orientation such that an adjacent voxel can be printed in any direction relative to a deposited voxel (e.g., top, side, bottom).

In an exemplary embodiment, the print head assembly 610 can include a number of print heads 612a-h oriented in a linear fashion along a length of the print head assembly 610. In an example, the print heads are arranged in a linear row with one by four or eight print heads, depending on the printer model. The print heads can be arranged in alternative arrangements to disperse an appropriate type of resin with a droplet volume for one voxel at an appropriate location or voxel in 3D space. For example, the print head can have multiple rows that each print in parallel or in synchrony with each other. A first row of print heads can print with a first resin and another row of print heads can print with another resin. A first conditioner 620a positioned at a forward position along the length of the print head assembly 610, a second conditioner 620b positioned at a trailing position along the length of the print head assembly 610, and a shaper 630 configured to shape/flatten a printed droplet. In an example, the shaper 630 can be adjusted for height.

As shown in FIG. 6C, print heads 612a-h can be active serially as well as in parallel. In an example, print heads 612a-b deposit droplet "A", print head 612e deposits droplet "B", and print heads 612g-h deposit droplet "C", while print heads 612c, 612d, and 612f are inactive.

In some implementations, each droplet may require multiple exposures of conditioning (e.g., UV treatment). In an example, the first conditioner 620a can deliver a first conditioning exposure and the second conditioner 620b can deliver a second conditioning exposure. In an example, the first/second conditioner 620a-b can deliver conditioning to multiple rows of dispersed droplets. In some implementations, each droplet can be disbursed while the print head is moving, where the droplet can be formed as a single discrete volume or an elongated stream.

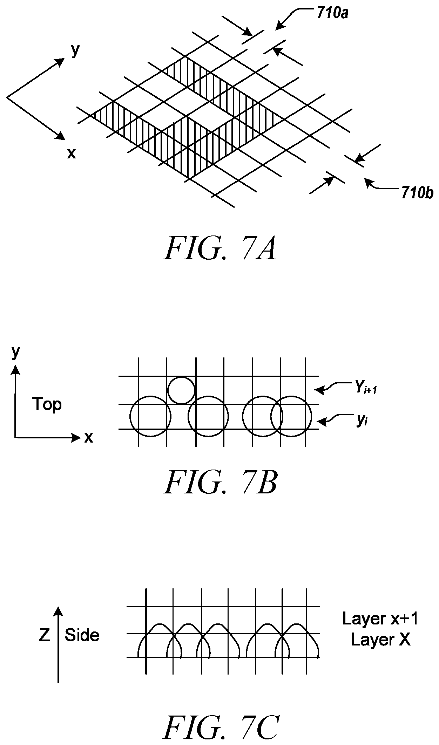

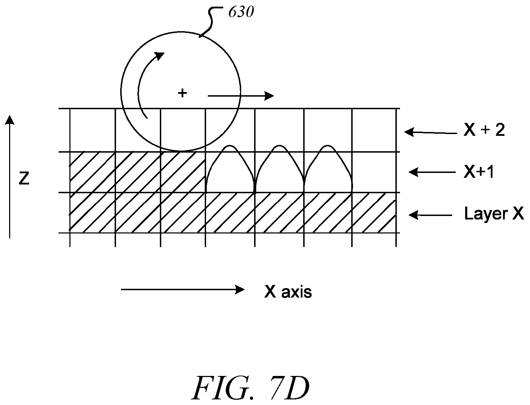

FIG. 7A is a perspective drawing of a layer of a portion of a printed aligner having an arrangement of voxels illustrated as a grid pattern with rows in an x and y direction according to an exemplary embodiment. In an aspect, each voxel 710a-b can have a printable resolution based on capabilities of the printer head assembly. In an example, each voxel 710a-b can be 42 microns on a side. A top-down drawing of the portion of the printed aligner is shown in FIG. 7B having droplets of material deposited in substantially predetermined voxel areas shown as a grid pattern. A side drawing of the portion of the printed aligner is shown in FIG. 7C showing substantially non-uniform shapes of the droplets according to an exemplary embodiment. Several droplets are shown deposited within a first layer, where portions of the droplets extend to a next layer above in a z-direction. FIG. 7D is a side-view drawing of a shaper flattening the non-uniform shapes of the droplets into uniform shapes according to an exemplary embodiment.

### Method for Directly Printing an Aligner

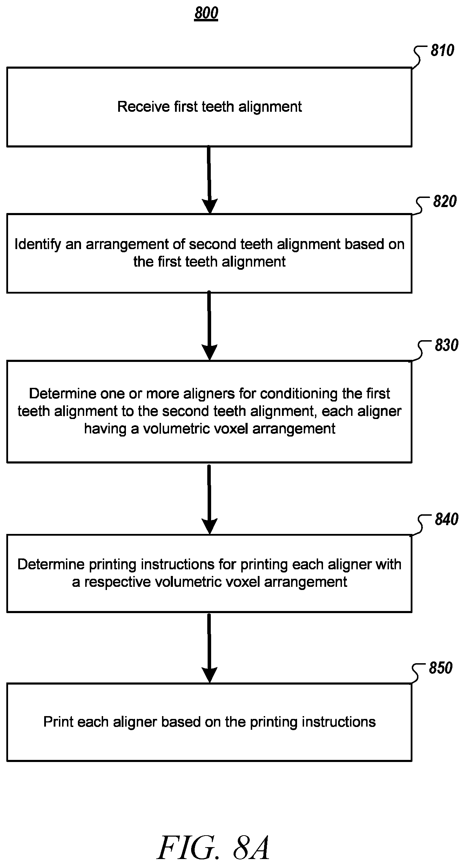

FIG. 8A is a flowchart describing a method 800 for determining printing instructions for an aligner configuration for modifying a teeth alignment according to an exemplary embodiment. In some implementations, the method 800 for printing an aligner can include a number of steps that can be performed by the printer 602 (see FIG. 8A). In an exemplary embodiment, one or more of the number of steps of the method 800 can be performed by the remote computing system 604 and communicated to the printer 602. In another example, the computing system 604 may be an integral component of the printer 602. In an example, the method 800 can include receiving first teeth alignment (X-ray, 3D CAD, file) (810). In an exemplary embodiment, a digital representation of the patient's teeth is stored in a software file stored electronically in a virtual space as a 3D curvilinear shape, with exact dimensions, to the extent that all surfaces are exactly and precisely known.

In some implementations, the first teeth alignment can be received by the remote computing system 604 and/or the medical imaging system 608. In an exemplary embodiment, the digital representation of the patient's teeth can be stored as a table of coordinates in 3D space interpreted as an arrangement of triangles in which each triangle with its normal face defining dimensions of the voxel. In another exemplary embodiment, the digital representation of the patient's teeth can be stored as a 3D surface made from a number of triangles that define a body in space. In an example, the printer 602 can have native software configured to receive the 3D datasets (e.g., the table of coordinates and the 3D surface) and to reduce that data to actionable volumetric pixels, or voxels.

In an example, the method 800 can include identifying an arrangement of a second teeth alignment based on the first teeth alignment (820). In an exemplary embodiment, a correcting dentition of the first teeth alignment is based on rules that are a basis of instructions and provide for a manner of machine/software evaluation and decision making. Some rules will define which teeth are best to be moved first, in a certain manner, and if multiple teeth can be moved at the same time with any given aligner in a sequence of aligners. The machine/software will perform assessments of current versus end goal and perform calculations of what movement(s) are logically next in the sequence of aligners based on governing rules and parameters that serve as guidance for achieving optimally arranged teeth. In some implementations, identifying an arrangement of the second teeth alignment based on the first teeth alignment can be provided as an input performed manually by a provider. In this case, the number of iterative stresses required to cause the arrangement of the second teeth alignment can be determined based on the manually determined arrangement of the second teeth alignment.

In an example, the method 800 can determine one or more aligners configured to condition the first teeth alignment to the second teeth alignment, each aligner having a volumetric voxel arrangement (830). In an example, the volumetric voxel arrangement can have a number of width-aligned voxels 322, a number of height-aligned voxels 324, and a number of length-aligned voxels 326 (FIG. 3B). In an example, determining one or more aligners configured to condition the first teeth alignment to the second teeth alignment can include an aligner having a volumetric voxel arrangement with at least one alignment feature rod/connector 320/420/430/530 (FIGs. 3B, 4, and 5). In an exemplary embodiment, an aligner prescription can be determined defining how an aligner should be constructed based on established methods available to affect tooth movement for a next step in the treatment plan. Given the available choices, a determination can be made for a shape and location of a connector in order to achieve its intended effect. In an example, the determination can be based on calculations of what forces may be needed to move a tooth from one attitude to another based on a table of strength of material property values of available resins.

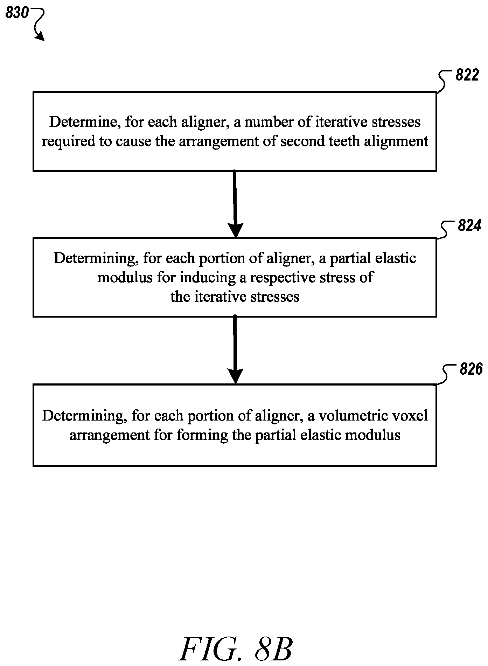

In some implementations, the determining of the volumetric voxel arrangement of each aligner can be performed automatically by machine learning and recursive methods to conform to a template or to minimize spacing between teeth. FIG. 8B is a flowchart diagram of an exemplary method for determining the volumetric voxel arrangement of each aligner. In an example, determining the volumetric voxel arrangement of each aligner can include determining, for each aligner, a number of iterative stresses to cause the arrangement of the second teeth alignment (832), determining, for each portion of the aligner, a partial elastic modulus configured to induce a respective stress of the iterative stresses (834), and determining, for each portion of the aligner, a volumetric voxel arrangement to form the partial elastic modulus (836). In an example, determining a volumetric voxel arrangement to form the partial elastic modulus can include applying at least one structural mechanics calculation for computing structural stresses and loads to achieve a respective iterative stress. In some implementations, determining a volumetric voxel arrangement to form the partial elastic modulus can further include selecting a first resin and a second resin, where, a mixture of the first resin and the second resin is configured to form the partial elastic modulus. In an example, the mixture can have different chemical properties than either of the first resin and the second resin.

In some implementations, each iterative stress can be determined using a beam deflection equation and/or a finite element analysis model. In an example, structural mechanics calculations can be referenced in a look up table (e.g., Machinery's Handbook, published by Industrial Press, Inc., South Norwalk, CT) of different types of structural stresses and loading. In an example, the determination of the number of iterative stresses can be determined based on governing rules and parameters for arranging teeth that can be in the look up table. In another example, the determination of the number of iterative stresses can be patient-specific and derived from the medical imaging system and/or other testing.

In some implementations, the printer or a remote computing system in communication with the printer can dynamically determine the number of iterative stresses required to cause the arrangement of the second teeth alignment. For example, the number of iterative stresses can be determined using machine learning (i.e. artificial intelligence) to determine precise and incremental adjustment of each tooth location in a series of steps to achieve an optimal arrangement for any given dentition based on accumulating parameters.

In some implementations, the arrangement of the second teeth alignment can be determined by setting a stress threshold for the number of iterative stresses. For example, a stress threshold can be set and a distance and/or torsion amount for a respective tooth movement can be determined to form the arrangement of the second teeth alignment.

In an example, the method 800 can include determining printing instructions for printing each aligner with a respective volumetric voxel arrangement (840). In an example, the printing instructions can include an ordering or sequence and timing of disposing each droplet using a particular material within the volumetric voxel arrangement. In an example, the printing instructions can further include a pre-treatment and/or a post-treatment before and/or after disposing each droplet within the volumetric voxel arrangement. In an exemplary embodiment, the printing instructions can be configured for a respective printer's capabilities to print with multiple materials, to resolve 3D objects into discrete voxels. Additionally, the printing instructions can provide for the method of delivering and arranging different materials (resins) to the correct location in such a way that the intended shape can be constructed with the designed features that are calculated for the aligner to accomplish predetermined movements of one or more teeth. In an example, the printing instructions can be configured to print on an additive manufacturing printer such as a Polyjet printer from Stratasys, Ltd. (Billerica, MA).

In an example, the method 800 can include printing one or more aligners based on the printing instructions (850). In an exemplary embodiment, the printing process is accomplished by building one layer of voxels at a time. All calculations and instructions for how and where each droplet of material is placed during the printing job can be included in the printing instructions, which, in some examples, can be determined prior to the start of printing. In an example, the printer can be configured to discretize the 3D object into voxels as the 3D object is defined in 3D virtual space.

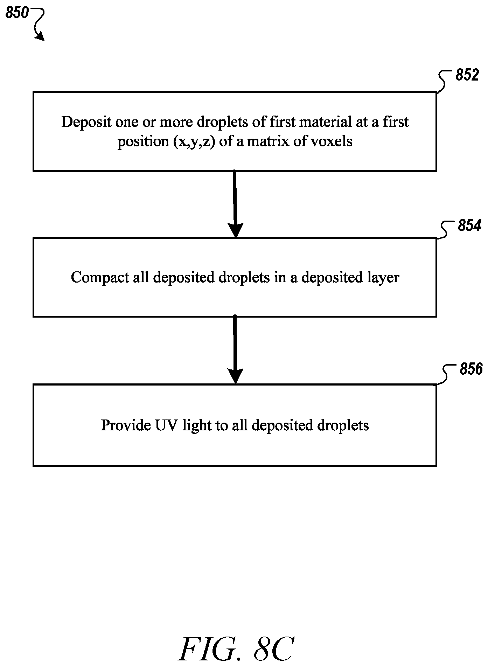

FIG. 8C is a flowchart describing a method for printing one or more aligners based on the printing instructions (850) according to an exemplary embodiment. In an example, the printing one or more aligners based on the printing instructions can include depositing a droplet of first material at a first position (x,y,z) of a matrix of voxels according to the printing instructions (852), compacting, using a shaper on the printing head, all deposited droplets in a deposited layer (854), and providing a conditioning dose to all deposited droplets (856). In an example, the step of providing a conditioning dose to all deposited droplets (856) may be repeated multiple times to a printed voxel in a first row, during depositing of a droplet in another row. The printed aligner, in some implementations, can be fabricated by curing thin layers of dispensed resins with ultraviolet light, one layer at a time. In an example, the printed aligner can undergo post processing steps such as cleaning with one of several acceptable methods.

Although illustrated in a particular series of events, in other implementations, the steps of the method 800 for determining printing instructions for an aligner configuration for modifying a teeth alignment may be performed in a different order. For example, determining one or more of the aligners for achieve the second teeth alignment (830) may be performed before, after, or simultaneously with determining at least one of the printing instructions for printing the aligners (840). Additionally, in other embodiments, the process may include more or fewer steps while remaining within the scope of the database query construction and execution process 200.

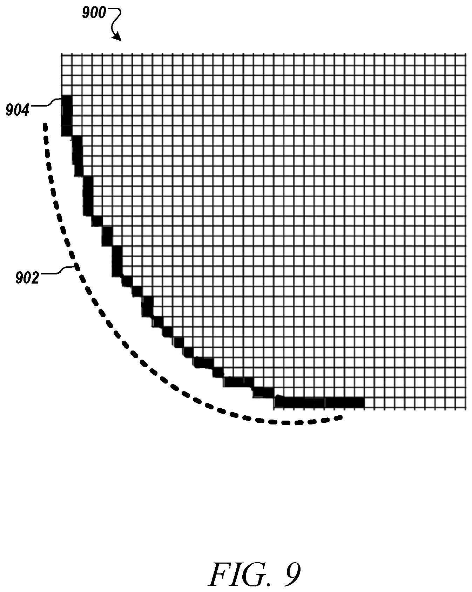

FIG. 9 depicts a printing method of producing curvilinear bodies and surfaces with stair-stepping voxels with control of what material is included in each voxel. A curve 902 representing a portion of a curvilinear body with a radius of curvature of 4 mm is shown offset from a printed edge 904 of a printed appliance 900. In an example, each voxel of the printed edge 904 has a dimension of approximately 100 microns per side. The stair-stepping design provides such fine resolution that when observing the printed edge 904 in true size, the edge 904 looks and feels smooth but is constructed of voxels, where each voxel made from one or more materials. In an aspect, the stair-stepping resolution can soften edges of the appliance and produce chaffered edges to prevent discomfort to the wearer when interfacing with tissue.

In an aspect, this disclosure provides a system and method for building matrices, forming targeted forces to be applied exactly where they are needed, via 3D printing at the voxel level, of two or more materials to obtain material properties not possible with any singular material. Using this system, appliances can be constructed using sourced mechanics, custom geometry and lookup tables to determine a series of treatments and how they optimally can be constructed.

All of the functionalities described in connection with one embodiment are intended to be applicable to the additional embodiments described below except where expressly stated or where the feature or function is incompatible with the additional embodiments. For example, where a given feature or function is expressly described in connection with one embodiment but not expressly mentioned in connection with an alternative embodiment, it should be understood that the inventors intend that that feature or function may be deployed, utilized or implemented in connection with the alternative embodiment unless the feature or function is incompatible with the alternative embodiment.

While certain embodiments have been described, these embodiments have been presented by way of example only, and are not intended to limit the scope of the present disclosures. Indeed, the novel methods, apparatuses and systems described herein can be embodied in a variety of other forms; furthermore, various omissions, substitutions and changes in the form of the methods, apparatuses and systems described herein can be made without departing from the present disclosures. The accompanying claims and their equivalents are intended to cover such forms or modifications as would fall within the scope of the present disclosures.

## Claims

1. A dental appliance comprising:
a matrix of printed voxels having a three-dimensional shape of a dental arch for surrounding a set of teeth corresponding to a first teeth alignment of a patient, the shape of the dental arch having a lingual side, an occlusal surface, and a facial side; wherein
each voxel includes a deposited material for adhering to an adjacent voxel;
the matrix of printed voxels applies a force to one or more teeth of the set of teeth causing the one or more teeth to shift into a second teeth alignment;
the matrix of printed voxels comprises first voxels (212) and connected second voxels (230), wherein a number of the connected second voxels (230) separate each first voxel (212), and where the number of connected second voxels (230) determines the rigidity of an aligner (100) in one or more spatial directions, and,
when taken together, the first voxels (212) and the number of connected second voxels (230) forms a singular or dynamic material flexural characteristic or elastic modulus.

2. The dental appliance of the preceding claim, wherein the matrix of printed voxels includes one or more sections of variable elasticity, and each section of variable elasticity is configured to apply a local force to the one or more teeth of the set of teeth causing the one or more teeth to shift.

3. The dental appliance of any of the preceding claims, wherein the matrix of voxels has one or more voxels formed from a first resin with a first durometer and one or more voxels formed from a second resin with a second durometer; optionally wherein the first durometer is considered hard and the second durometer is considered soft.

4. A method of forming a dental appliance according to any of the preceding dental appliance claims, the method comprising:
receiving a first teeth alignment;
identifying, by processing circuitry, an arrangement of second teeth alignment based on the first teeth alignment;
determining, by the processing circuitry, a respective volumetric voxel arrangement for each aligner of one or more aligners (100) for conditioning the first teeth alignment to the second teeth alignment, each aligner (100) having an arrangement of first voxels and connected second voxels, the number of connected second voxels determining the rigidity of the aligner in one or more spatial directions; and
determining, by the processing circuitry, printing instructions for printing each aligner (100) with a respective volumetric voxel arrangement.

5. The method of the preceding claim, further comprising printing each aligner (100) based on the printing instructions; optionally wherein printing each aligner (100) comprises depositing one or more droplets of first material at a first position x, y, z of a matrix of voxels, compacting all droplets in a deposited layer, and providing a conditioner (620a, 620b) to all deposited droplets.

6. The method of any of the preceding method claims, wherein determining the volumetric voxel arrangement of each aligner (100) comprises:
determining, for each aligner (100), a number of iterative stresses required to cause the arrangement of second teeth alignment;
determining, for each portion (100a) of aligner (100), a partial elastic modulus for inducing a respective stress of the iterative stresses; and
determining, for each portion (100a) of aligner (100), a volumetric voxel arrangement having the partial elastic modulus.

7. The method of any of the preceding method claims, further comprising selecting, by the processing circuitry, a first resin and a second resin, wherein, a mixture of the first resin and the second resin forms the partial elastic modulus.
